# EUROPEAN PATENT SPECIFICATION

(11) **EP 3 965 414 B1**
(45) Date of publication and mention of the grant of the patent: **01.02.2023**
(21) Application number: 20275135.0
(22) Date of filing: 03.09.2020
(51) Int. Cl.: H04N 7/18, H04B 7/185, H04W 16/18, H04W 24/02, H04W 84/06, H04W 16/22

(54) **A SYSTEM COMPRISING A COMMUNICATION NETWORK AND A DRONE PROVISIONING SYSTEM AND A METHOD THEREOF**
SYSTEM MIT EINEM KOMMUNIKATIONSNETZ UND EINEM DROHNENBEREITSTELLUNGSSYSTEM UND VERFAHREN DAFÜR
SYSTÈME COMPRENANT UN RÉSEAU DE COMMUNICATION ET UN SYSTÈME DE FOURNITURE DE DRONE ET PROCÉDÉ ASSOCIÉ

(43) Date of publication of application: 09.03.2022
(73) Proprietor: Deutsche Telekom AG, 53113 Bonn (DE)
(72) Inventor: BEARD, Timothy Giles, Cambridge, CB4 3HJ (GB); WALKER, Nicholas, Twickenham, Middlesex TW1 4JX (GB)
(74) Representative: Vossius & Partner Patentanwälte Rechtsanwälte mbB

(56) References cited:
- WO-A1-2016/012889
- US-A1- 2016 373 963
- US-A1- 2018 253 606
- US-B1- 9 973 261

## Description

### Field of the invention

This invention relates to an ad-hoc drone network with minimally invasive video surveillance. In particular, the invention relates to a system comprising a communication network and a drone provisioning system.

### Background

Mobile networks have increasingly sophisticated ways to predict network loading based on subscriber data.

One particular type of ad-hoc network provision may be provided via drones. For example, drones have the capability to act as temporary base stations in mobile networks to provide on-demand network coverage such as, for example, in emergency situations. The following link https://www.pwc.pl/en/drone-powered-solutions/Articles/2018/drone-as-emergency-ad-hoc-networks.html relates to drones acting as emergency ad-hoc network provisions.

In this regard, there is a significant and growing interest into researching for an optimal placement of drones for provision of network services. "UAV Base Station Location Optimization for Next Generation Wireless Networks: Overview and Future Research Directions", ISBN: 978-1-5386-9368-1, https://ieeexplore.ieee.org/document/8658363, relates to location optimization of UAV-BSs in NGWNs.

Deep learning techniques are enabling increasingly sophisticated identification of activities in video surveillance. Some of these deep learning techniques may range, for example, from basic object recognition to analysis of the behavior of individuals and crowds, and identification of escalating tensions in crowds. Similar techniques are also able to predict future behavior of individuals and crowds from images and video footage.

Sreenu, G., Saleem Durai, M.A. Intelligent video surveillance: a review through deep learning techniques for crowd analysis. J Big Data 6, 48 (2019). https://doi.org/10.1186/s40537-019-0212-5, relates to intelligent video surveillance through deep learning techniques for crowd analysis. F.L. Sánchez, I. Hupont, S. Tabik, F. Herreraa "Revisiting crowd behaviour analysis through deep learning: Taxonomy, anomaly detection, crowd emotions, datasets, opportunities and prospects", https://doi.org/10.1016/j.inffus.2020.07.008, relates to deep learning techniques for revisiting crowd behavior analysis.

However, there is an increasing concern about ubiquitous video surveillance in some countries, particularly with facial recognition technologies.

US 2016/373963 A1 relates to systems and methods for an automatically deployed wireless network. An access point controller (AC) determines the existence of a network anomaly at a position of a wireless network that is managed by the AC. Responsive thereto, the AC causes an unmanned vehicle that carries a movable access point (AP) to carry the movable AP to the position or proximate thereto and causes the movable AP to provide wireless network service to an area encompassing the position by sending a dispatch command to the unmanned vehicle. The dispatch command instructs the unmanned vehicle to move to the position or proximate thereto. WO 2016/012889 A1 relates to systems and methods for evaluating and determining the capacity of cellular networks ground based stations, and the tactical deployment and use of telecommunications-equipped unmanned aerial vehicles (UAV) or "drones" to augment the capacities and capabilities of land-based cellular network base stations.

### Technical problem

Mobile network demand in unusual and unexpected situations can spike and overload a network just when the services are needed most. Although continual video surveillance could rapidly identify situations where unusual demand may be needed, enabling deployment of extra capacity, people are often not comfortable with ubiquitous surveillance. Another problem that occurs with some highly efficient systems without redundancy, is that they can struggle to cope with unexpected events.

In view of the above, it is an object of the present invention to provide a drone network, with minimally invasive video surveillance, with a sophisticated and efficient load balancing within the overall network.

Further, another object of the present invention is to provide a drone network capable of providing on-demand capacity when and where needed.

According to the invention, network operators could achieve a precise average loading prediction in their networks with minimally invasive video surveillance.

### Summary of the invention

The invention is specified by the independent claims. Preferred embodiments are defined in the dependent claims. According to a first aspect of the invention, there is provided a system comprising a communication network and a drone provisioning system as defined by independent claim 1.

According to a second aspect of the invention, there is provided a method for provisioning drones in a system as defined by independent claim 7.

The system and method of the present invention enable identification of anomalous communications network activity, by optimally deploying surveillance drones for identifying the causes of anomalous network activity when needed, while minimizing unnecessary surveillance.

Further, according to the present invention, it is possible to optimally deploy network capacity drones to maintain quality of service in areas of current and predicted increases in network activity.

Other aspects, features, and advantages will be apparent from the summary above, as well as from the description that follows, including the figures and the claims.

### Brief description of the drawings

In the drawings:
- FIG. 1: illustrates an overview of the system according to an exemplary embodiment of the invention;
- FIG. 2: illustrates a process flow diagram according to an exemplary embodiment of the invention; and
- FIG. 3: illustrates a flowchart of a method according to an exemplary embodiment of the invention.

### Detailed description of the invention

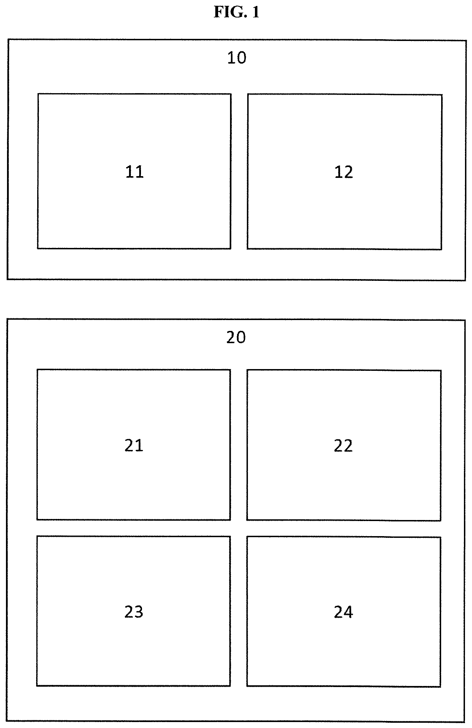

FIG. 1 illustrates an overview of the system according to an exemplary embodiment of the invention. The system illustrated by FIG. 1 comprises a communication network 10 and a drone provisioning system 20.

The communication network 10 may comprise a network modelling sub-system 11 and a network behavior comparison algorithm 12.

The drone provisioning system 20 may comprise a drone platoon sub-system 21, a surveillance drone routing algorithm 22, an anomalous behavior detection and prediction algorithm 23 and a communication drone placement algorithm 24.

The network modelling sub-system creates a predictive model of subscriber behavior in terms of network traffic, e.g. by creating a digital twin of the network. The predicted behavior is compared, by the network behavior comparison algorithm 12, to the real network activity.

If, within a locality, the behavior of enough individuals goes outside one or more predefined bounds, a video/base station drone is deployed, by the drone provisioning system 20, to that location to both assess the reason for the divergence and to also provide temporary additional service capabilities. In this way, video surveillance is only performed when and where the benefit is likely to be high.

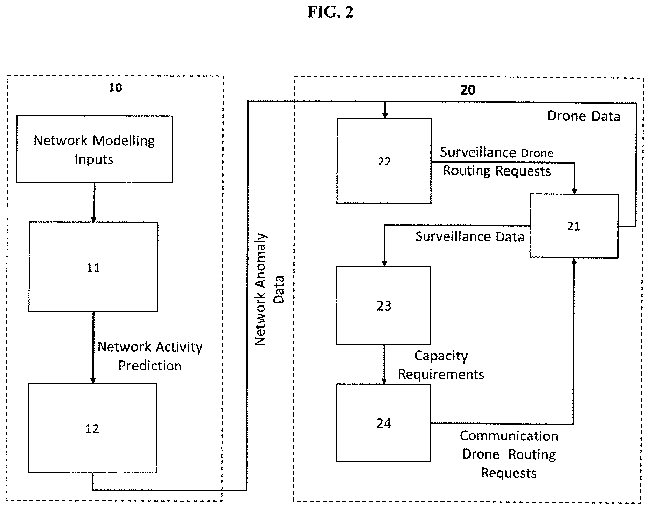

FIG. 2 illustrates a detailed process flow diagram according to an exemplary embodiment of the invention. Hereinbelow, the communication network 10 and the drone provisioning system 20 will be described in detail with reference to FIG. 2.

The tasks of the communication network 10 are to model network activity, predict future activity and identify anomalous activity. In detail,

The network modelling sub-system 11 is configured to monitor network activity and to predict future network activity. In particular, the network modelling sub-system 11 models the network activity and predicts future network activity based on various inputs. These inputs will be referred to as network modelling inputs and may comprise one or more of the following: historical network activity, consumer data and locations, real-time monitoring of network activity, news and events. Once the prediction of future activity is completed, the network modelling sub-system 11 outputs the prediction of future network activity to the network behavior comparison algorithm 12.

The network behavior comparison algorithm 12 is configured to compare current network activity with the received predicted network activity and to identify anomalous activity. Thus, the inputs to the network behavior comparison algorithm 12 comprise the prediction of future network activity and the current network activity. As a result of the comparison, the network behavior comparison algorithm 12 outputs network anomaly data to the drone provisioning system 20. The network anomaly data may comprise a set of anomalous activities within the network.

The drone provisioning system 20 is configured to provide and to manage a set of drones. A drone is to be understood as a vehicle which may move and navigate autonomously without human input. In this context, drones may include, but are not limited to, air-based flying vehicles and ground-based wheeled vehicle. All drones are capable of communicating with the network and, optionally, with each other.

The drone platoon sub-system 21 comprises of the set of drones and infrastructure to manage their operation, including activities, routing, charging, maintenance, etc. Here, two specific types of drones are defined:
- Surveillance drone - a drone capable of carrying out surveillance activities, including but not limited to video or audio surveillance, environmental sensing such as temperature, humidity, electromagnetic activity, etc.
- Communication drone - a drone capable of providing additional network communications or processing capacity on an ad-hoc basis as part of the network, for example acting as a mobile base station. Note that this is in addition to communication capabilities for its own purposes.

A single drone may function as both a surveillance drone and a communication drone. In addition, drones in the drone platoon sub-system 21 may be additionally performing other activities such as delivery services until required to assist with network management activities.

The surveillance drone routing algorithm 22 is configured to select and redirect one or more surveillance drones to areas of anomalous network activity to perform surveillance activities. The inputs to the surveillance drone routing algorithm 22 may comprise: the network anomaly data from the network behavior comparison algorithm 12, data on drone status from the drone platoon sub-system 21, wherein the drone (status) data may include: location, capabilities, availability, battery status, ongoing activity, or any other similar drone information.

In sum, the surveillance drone routing algorithm 22 is configured to output requests for surveillance activities, in particular surveillance drone routing requests, based on the above-mentioned inputs to the drone platoon sub-system 21.

The anomalous behavior detection and prediction algorithm 23 is configured to detect anomalous behavior based on surveillance data received from the drone platoon sub-system 21, and to predict future behavior that will impact the network's capacity requirements. The surveillance data may comprise one or more of: surveillance data from surveillance drones, drone locations, and network and subscriber activity. Thereafter, the anomalous behavior detection and prediction algorithm 23 is configured to output predicted network capacity requirements based on detected current subscriber behavior and predicted future subscriber behavior, i.e. predicted future capacity requirements.

The communication drone placement algorithm 24 is configured to calculate an optimal placement of communication drones to meet current and predicted network capacity requirements, based on available resources and the outputted predicted network capacity requirements from the anomalous behavior detection and prediction algorithm 23.

Based on the above, the communication drone placement algorithm 24 is configured to send one or more communication drone routing requests for communication drone routing and placement for provision of network capacity to the drone platoon sub-system 21.

Further, the drone platoon sub-system 21 is configured to optimally place drones with network capacity provision capabilities to provide additional network coverage, based on the received communication drone routing requests.

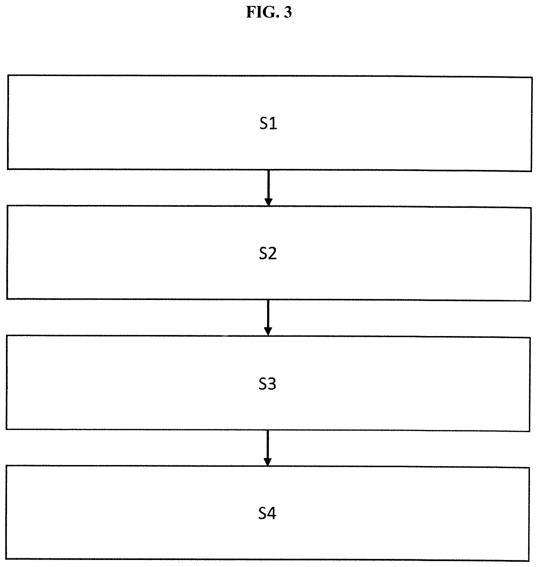

FIG. 3 illustrates a flowchart of a method according to an exemplary embodiment of the invention. A process for dynamically provisioning wireless network capacity is described. The process is designed to identify anomalous activity in a network and, through the use of minimally invasive drone surveillance and drone capacity provisioning, optimally deploy network resources to ensure that an adequate quality of service is maintained. The method comprising the following steps:

Creating (S1), by the network, a predictive model of the network and subscriber activity. This process is performed by the network modelling sub-system 10. For example, the predictive model of the network may be in the form of a "digital twin" of the network, maintaining a virtual instance of the real network, which is continually updated with real network data but with the ability to simulate and predict future network operations.

Preferably, based on said predictive model, a set of predictions may be produced for each node of the network in terms of usage, capacity requirements, numbers of subscribers at future points in time.

As a result, network activity prediction data is output to the network behavior comparison algorithm 12. The network activity prediction data may comprise tolerances for what is considered the range of normal operation.

Then, the network behavior comparison algorithm performs the steps of: comparing (S2) an actual network activity against the predictive model of the network and subscriber activity, identifying any anomalies and sending network anomaly data to the drone provisioning system.

Preferably, the network behavior comparison algorithm 12 looks at the network activity prediction for the current time, compares it against the actual measured activity for each node in the network, and identifies significant differences.

By way of examples, anomalous activities may comprise, but are not limited to: unexpected spikes in demand at particular locations, a significant difference in the number of active subscribers at a location compared to the prediction, an increase in emergency calls, unexpected movements of large numbers of subscribers away or towards a location.

Preferably, the network behavior comparison algorithm 12 may consider the range of normal operation. For example, it may be normal for between 10 and 100 subscribers to be active on a particular cell covering a train station at 11am based on historical data and subscriber modelling. However, if there are 150 subscribers active, that would be indicative of anomalous activity which may be a precursor to an unexpected event that will require additional network capacity. It may also be that usage is less than normally expected. This may also be worth investigating as it may enable network optimization by rerouting resources to other areas, depending on the cause of the low usage.

The drone provisioning system 20 performs the steps of: receiving the network anomaly data, optimally deploying (S3) drones with surveillance capabilities for detecting reasons of unexpected network activity, and predicting upcoming activity and network capacity requirements.

Based on the network anomaly data, the surveillance drone routing algorithm 22 (which considers a pool of available surveillance drones) sends a request for re-routing and performing surveillance operations to one or more drones of the drone platoon sub-system 21 to the areas of anomalous activity.

Preferably, the surveillance drone routing algorithm may take the above actions based on one or more of the following information: the current locations and activities of the surveillance drones and thus how long it would take for a drone to reach the desired point of surveillance, the battery status of the surveillance drones, the capabilities of the surveillance drones - while audio and video capabilities are likely to be a pre-requisite, other capabilities may be useful, such as Light Detection and Ranging (LIDAR) or other time-of-flight technologies for 3D mapping of the area, infra-red or hyperspectral imaging, etc.

Preferably, an initial route that is likely to provide complete surveillance of the location where anomalous activity was detected is calculated. This may include for example moving around the perimeter of the area to generate a 360-degree picture of the area.

The surveillance data provided by the drone platoon sub-system 21 is sent/routed to the anomalous behavior detection and prediction algorithm 23 and used to understand the situation causing the anomaly.

Preferably, the anomalous behavior detection and prediction algorithm 23 may use deep learning techniques to perform object analysis, individual activity analysis and crowd analysis.

These analyses can identify specific activities (e.g. car accidents, a medical emergency, crowd violence, location-based games or activities that are attracting a crowd, queues for a store sales event or pop-up event, etc.) that may be the cause of the anomalous network activity. If the network usage is lower than expected, this may be due to an area being closed off for building works, for example. In this case, any dynamically allocated resources covering the area could be redeployed more optimally elsewhere.

Additionally, the deep learning techniques may also be used to predict future behavior and thus likely future network capacity needs. For example, if subscribers in vehicles are moving slower than expected, this could be due to heavy traffic or a car accident. If due to heavy traffic, no particular spike in usage may be expected so no additional capacity is needed. However, in the case of a car accident there may be a need for increased capacity due to emergency services in the near future, plus held-up drivers and connected cars may be expected to increase network usage.

The anomalous behavior detection and prediction algorithm 23 outputs/sends the current and near-future capacity requirements, based on the received surveillance data and/or the above optional analyses, to the communication drone placement algorithm 24.

The communication drone placement algorithm 24 uses the analysis of the anomalies identified, the results of the surveillance activities and the current and near-future capacity requirements to generate and send one or more communication drone routing requests to the drone platoon sub-system.

Lastly, the drone platoon sub-system optimally places (S4) drones with network capacity provision capabilities to provide additional network coverage.

In addition to the current and near-future capacity requirements, the communication drone placement algorithm 24 may further receive: the current locations and activities of the communication drones and thus how long it would take for a drone to reach the point of surveillance, the battery status of the communication drones, the capabilities of the communication drones, the priority of the situation - for example an emergency situation would have a higher priority than a shopping event.

In some instances, a surveillance drone already on-site providing surveillance may also be able to function as a communication drone and provide some or all of the capacity to cover the situation.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system comprising a communication network (10) and a drone provisioning system (20), the communication network (10) comprising a network modelling sub-system (11) and a network behavior comparison algorithm (12), the drone provisioning system (20) comprising a drone platoon sub-system (21) comprising a set of drones, wherein the set of drones comprises at least a surveillance drone and a communication drone, whereas the surveillance drones function also as communication drones, a surveillance drone routing algorithm (22), an anomalous behavior detection and prediction algorithm (23) and a communication drone placement algorithm (24), wherein:
the network modelling sub-system (11) is configured to monitor network activity and create a predictive model of subscriber behavior in terms of network traffic;
the network behavior comparison algorithm (12) is configured to: compare the predicted model of subscriber behavior with current network traffic, identify any anomalous activity as significant differences between the current activity and the predicted activity, and output network anomaly data to the drone provisioning system (20);
the surveillance drone routing algorithm (22) is configured to send one or more surveillance drone routing requests to the drone platoon sub-system (21), based on the anomaly data;
the drone platoon sub-system (21) is configured to deploy one or more surveillance drones to an anomaly location specified by the one or more surveillance drone routing requests, wherein the deployed surveillance drone or drones are configured to:
collect surveillance information at the anomaly location,
provide temporary additional service capabilities, and
send the surveillance information to the anomalous behavior detection and prediction algorithm (23);
the anomalous behavior detection and prediction algorithm (23) is configured to:
detect anomalous behavior based on the surveillance information,
identify the reason for the anomaly based on the surveillance information,
predict future capacity requirements and future subscriber behavior, and
send the predicted future capacity requirements to the communication drone placement algorithm (24);
the communication drone placement algorithm (24) is configured to:
calculate an optimal placement of one or more communication drones to meet current and predicted network capacity requirements, based on available resources and the predicted future network capacity requirements,
send one or more communication drone routing requests, for communication drone routing and placement for provision of network capacity, each communication drone routing request comprising its respective calculated optimal placement, to the drone platoon sub-system (21);
the drone platoon sub-system (21) is configured to optimally deploy communication drones to an anomaly location specified by the one or more communication drone routing requests.

2. The system of claim 1, wherein the result of the comparison comprises network anomaly information for indicating anomalous subscriber behavior within a locality of subscribers, wherein the subscriber behavior is regarded as normal when it is within a predefined range of the predicted behavior and is regarded as anomalous when it is not within the predefined range of the predicted behavior, and
wherein the one or more surveillance drone routing requests comprises the network anomaly information.

3. The system of claim 1 or 2, wherein the surveillance drone routing algorithm (22) is configured to receive information regarding a drone status from the drone platoon sub-system (21).

4. The system of claim 3, wherein the drone information comprises one or more of the following information of a drone: location, capabilities, availability, battery status, ongoing activity.

5. The system of any one of claims 1 to 4, wherein the collection of surveillance information at the anomaly location, by one or more of the deployed surveillance drones, comprises one or more of the deployed surveillance drones to be configured to perform one or more of: video or audio surveillance, and/or environmental sensing, and/or
wherein the communication drone is configured to provide additional network communications and/or processing capacity on an ad-hoc basis as part of the communication network, and/or
wherein the communication drone is configured as a mobile base station.

6. The system of any one of claims 1 to 5, wherein the surveillance drone routing algorithm (22) is configured to receive data on drone status from the drone platoon sub-system (21), wherein the drone information comprises on or more of: location, capabilities, availability, battery status, and/or ongoing activity information; and/or
wherein the surveillance information comprises one or more of: surveillance information, drone locations, network activity and subscriber activity.

7. A method for provisioning drones in a system, the system comprising a communication network and a drone provisioning system, the communication network comprising a network modelling sub-system and a network behavior comparison algorithm, the drone provisioning system comprising a drone platoon sub-system comprising a set of drones, wherein the set of drones comprises at least a surveillance drone and a communication drone, whereas the surveillance drones function also as communication drones, a surveillance drone routing algorithm, an anomalous behavior detection and prediction algorithm and a communication drone placement algorithm, the method comprising the steps of:
monitoring network activity and creating (S1), by the network modelling sub-system, a predictive model of subscriber behavior in terms of network traffic;
comparing (S2), by the network behavior comparison algorithm, the predicted model of subscriber behavior with current network traffic, identifying any anomalous activity as significant differences between the current activity and the predicted activity, and outputting network anomaly data to the drone provisioning system;
sending, by the surveillance drone routing algorithm, one or more surveillance drone routing requests to the drone platoon sub-system, based on the anomaly data;
deploying (S3), by the drone platoon sub-system, one or more surveillance drones to an anomaly location specified by the one or more surveillance drone routing requests, wherein the deployed surveillance drone or drones: collect surveillance information at the anomaly location, provide temporary additional service capabilities, and send the surveillance information to the anomalous behavior detection and prediction algorithm,
wherein the anomalous behavior detection and prediction algorithm performs the steps of:
detecting anomalous behavior based on the surveillance information,
identifying the reason for the anomaly based on the surveillance information,
predicting future capacity requirements and future subscriber behavior, and
sending the predicted future capacity requirements to the communication drone placement algorithm,
wherein the communication drone placement algorithm performs the steps of:
calculating an optimal placement of one or more communication drones to meet current and predicted network capacity requirements, based on available resources and the predicted future network capacity requirements,
sending one or more communication drone routing requests, for communication drone routing and placement for provision of network capacity, each communication drone routing request comprising its respective calculated optimal placement, to the drone platoon sub-system; and
optimally deploying (S4), by the drone platoon sub-system, communication drones to an anomaly location specified by the one or more communication drone routing requests.

8. The method of claim 7, wherein the result of the comparing (S2) step comprises network anomaly information for indicating anomalous subscriber behavior within a locality of subscribers, wherein the subscriber behavior is regarded as normal when it is within a predefined range of the predicted behavior and is regarded as anomalous when it is not within the predefined range of the predicted behavior, and
wherein the one or more surveillance drone routing requests comprises the network anomaly information.

9. The method of claim 7 or 8, further comprising the step of:
receiving, by the surveillance drone routing algorithm, information regarding a drone status from the drone platoon sub-system.

10. The method of claim 9, wherein the drone information comprises one or more of the following information of a drone: location, capabilities, availability, battery status, ongoing activity.

11. The method of any one of claims 7 to 10, further comprising the steps of:
wherein the collecting of surveillance information at the anomaly location, by one or more of the deployed surveillance drones comprises performing, by the surveillance drone, one or more of: video or audio surveillance, and/or environmental sensing, and/or
providing, by the communication drone, additional network communications and/or processing capacity on an ad-hoc basis as part of the communication network, and/or
using the communication drone as a mobile base station.

12. The method of any one of claims 7 to 11, further comprising the step of:
receiving, by surveillance drone routing algorithm, data on drone status from the drone platoon sub-system, wherein the drone information comprises on or more of: location, capabilities, availability, battery status, and/or ongoing activity information; and/or
wherein the surveillance information comprises one or more of: surveillance information, drone locations, network activity and subscriber activity.

## Patentansprüche

1. System, das ein Kommunikationsnetzwerk (10) und ein Drohnenbereitstellungssystem (20) aufweist, wobei das Kommunikationsnetzwerk (10) ein Netzwerkmodellierungs-Subsystem (11) und einen Netzwerkverhaltens-Vergleichsalgorithmus (12) aufweist, wobei das Drohnenbereitstellungssystem (20) ein Drohnenzug-Subsystem (21) aufweist, das einen Satz von Drohnen aufweist, wobei der Drohnensatz mindestens eine Überwachungsdrohne und eine Kommunikationsdrohne, wobei die Überwachungsdrohnen auch als Kommunikationsdrohnen funktionieren, einen Überwachungsdrohnen-Routing-Algorithmus (22), einen Erkennungs- und Vorhersagealgorithmus (23) für anomales Verhalten und einen Kommunikationsdrohnen-Platzierungsalgorithmus (24) aufweist, wobei:
das Netzwerkmodellierungs-Subsystem (11) konfiguriert ist, die Netzwerkaktivität zu überwachen und ein Vorhersagemodell eines Teilnehmerverhaltens in Bezug auf den Netzwerkverkehr zu erstellen;
der Netzwerkverhaltens-Vergleichsalgorithmus (12) konfiguriert ist: das vorhergesagte Modell des Teilnehmerverhaltens mit dem aktuellen Netzwerkverkehr zu vergleichen, jegliche anomale Aktivität als signifikante Unterschiede zwischen der aktuellen Aktivität und der vorhergesagten Aktivität zu identifizieren und Netzwerkanomaliedaten an das Drohnenbereitstellungssystem (20) auszugeben;
der Überwachungsdrohnen-Routing-Algorithmus (22) konfiguriert ist, basierend auf den Anomaliedaten eine oder mehrere Überwachungsdrohnen-Routing-Anforderungen an das Drohnenzug-Subsystem (21) zu senden;
das Drohnenzug-Subsystem (21) konfiguriert ist, eine oder mehrere Überwachungsdrohnen an einem Anomalieort einzusetzen, der durch die eine oder mehrere Überwachungsdrohnen-Routing-Anforderungen spezifiziert wird, wobei die eingesetzte Überwachungsdrohne oder Drohnen konfiguriert sind:
Überwachungsinformationen am Anomalieort zu sammeln,
vorübergehende zusätzliche Dienstfähigkeiten bereitzustellen, und
die Überwachungsinformationen an den Erkennungs- und Vorhersagealgorithmus (23) für anomales Verhalten zu senden;
der Erkennungs- und Vorhersagealgorithmus (23) für anomales Verhalten konfiguriert ist:
anomales Verhalten basierend auf den Überwachungsinformationen zu erkennen,
den Grund für die Anomalie basierend auf den Überwachungsinformationen zu identifizieren,
zukünftige Kapazitätsanforderungen und zukünftiges Teilnehmerverhalten vorherzusagen, und
die vorhergesagten zukünftigen Kapazitätsanforderungen an den Kommunikationsdrohnen-Platzierungsalgorithmus (24) zu senden;
der Kommunikationsdrohnen-Platzierungsalgorithmus (24) konfiguriert ist:
eine optimale Platzierung von einer oder mehreren Kommunikationsdrohnen zu berechnen, um aktuelle und vorhergesagte Netzwerkkapazitätsanforderungen zu erfüllen, basierend auf verfügbaren Ressourcen und den vorhergesagten zukünftigen Netzwerkkapazitätsanforderungen,
eine oder mehrere Kommunikationsdrohnen-Routing-Anforderungen zum Kommunikationsdrohnen-Routing und zur Platzierung zur Bereitstellung der Netzwerkkapazität, wobei jede Kommunikationsdrohnen-Routing-Anforderung ihre jeweilige berechnete optimale Platzierung aufweist, an das Drohnenzug-Subsystem (21) zu senden;
das Drohnenzug-Subsystem (21) konfiguriert ist, Kommunikationsdrohnen optimal an einem Anomalieort einzusetzen, der durch die eine oder mehrere Kommunikationsdrohnen-Routing-Anforderungen spezifiziert wird.

2. System nach Anspruch 1, wobei das Ergebnis des Vergleichs Netzwerkanomalie-Informationen zum Anzeigen eines anomalen Teilnehmerverhaltens innerhalb einer Lokalität von Teilnehmern aufweist, wobei das Teilnehmerverhalten als normal angesehen wird, wenn es innerhalb eines vordefinierten Bereichs des vorhergesagten Verhaltens liegt, und als anomal angesehen wird, wenn es nicht innerhalb des vordefinierten Bereichs des vorhergesagten Verhaltens liegt, und
wobei die eine oder mehrere Überwachungsdrohnen-Routing-Anforderungen die Netzwerkanomalie-Informationen aufweist.

3. System nach Anspruch 1 oder 2, wobei der Überwachungsdrohnen-Routing-Algorithmus (22) konfiguriert ist, Informationen bezüglich eines Drohnenstatus vom Drohnenzug-Subsystem (21) zu empfangen.

4. System nach Anspruch 3, wobei die Drohneninformationen eine oder mehrere der folgenden Informationen über eine Drohne aufweisen: Ort, Fähigkeiten, Verfügbarkeit, Batteriestatus, laufende Aktivität.

5. System nach einem der Ansprüche 1 bis 4, wobei die Sammlung von Überwachungsinformationen am Anomalieort durch eine oder mehrere der eingesetzten Überwachungsdrohnen aufweist, dass eine oder mehrere der eingesetzten Überwachungsdrohnen konfiguriert sind, eine oder mehreres auszuführen von: Video- oder Audioüberwachung und/oder Umgebungserfassung und/oder
wobei die Kommunikationsdrohne konfiguriert ist, eine zusätzliche Netzwerkkommunikation und/oder Verarbeitungskapazität auf einer Ad-hoc-Basis als Teil des Kommunikationsnetzwerks bereitzustellen, und/oder
wobei die Kommunikationsdrohne als eine mobile Basisstation konfiguriert ist.

6. System nach einem der Ansprüche 1 bis 5, wobei der Überwachungsdrohnen-Routing-Algorithmus (22) konfiguriert ist, Daten über den Drohnenstatus vom Drohnenzug-Subsystem (21) empfängt, wobei die Drohneninformationen eines oder mehreres aufweisen von: Ort, Fähigkeiten, Verfügbarkeit, Batteriestatus und/oder Informationen über laufende Aktivitäten; und/oder
wobei die Überwachungsinformationen eines oder mehreres aufweisen von: Überwachungsinformationen, Drohnenorte, Netzwerkaktivität und Teilnehmeraktivität.

7. Verfahren zum Bereitstellen von Drohnen in einem System, wobei das System ein Kommunikationsnetzwerk und ein Drohnenbereitstellungssystem aufweist, wobei das Kommunikationsnetzwerk ein Netzwerkmodellierungs-Subsystem und einen Netzwerkverhaltens-Vergleichsalgorithmus aufweist, wobei das Drohnenbereitstellungssystem ein Drohnenzug-Subsystem, das einen Satz von Drohnen aufweist, wobei der Satz von Drohnen mindestens eine Überwachungsdrohne und eine Kommunikationsdrohne aufweist, wobei die Überwachungsdrohnen auch als Kommunikationsdrohnen fungieren, einen Überwachungsdrohnen-Routing-Algorithmus, einen Erkennungs- und Vorhersagealgorithmus für anomales Verhalten und einen Kommunikationsdrohnen-Platzierungsalgorithmus aufweist, wobei das Verfahren die Schritte aufweist:
Überwachen der Netzaktivität und Erstellen (S1), durch das Netzmodellierungssubsystem, eines Vorhersagemodells eines Teilnehmerverhaltens in Bezug auf den Netzwerkverkehr;
Vergleichen (S2), durch den Netzwerkverhaltens-Vergleichsalgorithmus, des vorhergesagten Modells des Teilnehmerverhaltens mit dem aktuellen Netzwerkverkehr, Identifizieren jeglicher anomaler Aktivität als signifikante Unterschiede zwischen der aktuellen Aktivität und der vorhergesagten Aktivität, und Ausgeben von Netzwerkanomaliedaten an das Drohnen-Bereitstellungssystem;
Senden, durch den Überwachungsdrohnen-Routing-Algorithmus, einer oder mehrerer Überwachungsdrohnen-Routing-Anforderungen an das Drohnenzug-Subsystem, basierend auf den Anomaliedaten;
Einsetzen (S3), durch das Drohnenzug-Subsystem, einer oder mehrerer Überwachungsdrohnen an einem Anomalieort, der durch die eine oder mehreren Überwachungsdrohnen-Routing-Anforderungen spezifiziert wird, wobei die eingesetzte Überwachungsdrohne oder Drohnen: Überwachungsinformationen am Anomalieort sammeln, vorübergehende zusätzliche Dienstfähigkeiten bereitstellen und die Überwachungsinformationen an den Erkennungs- und Vorhersagealgorithmus für anomales Verhalten senden,
wobei der Erkennungs- und Vorhersagealgorithmus für anomales Verhalten die Schritte ausführt:
Erkennen von anomalem Verhalten basierend auf den Überwachungsinformationen,
Identifizieren des Grunds für die Anomalie basierend auf den Überwachungsinformationen,
Vorhersagen von zukünftigen Kapazitätsanforderungen und zukünftigen Teilnehmerverhalten, und
Senden der vorhergesagten zukünftigen Kapazitätsanforderungen an den Kommunikationsdrohnen-Platzierungsalgorithmus,
wobei der Kommunikationsdrohnen-Platzierungsalgorithmus die Schritte ausführt:
Berechnen einer optimalen Platzierung von einer oder mehreren Kommunikationsdrohnen, um aktuelle und vorhergesagte Netzwerkkapazitätsanforderungen zu erfüllen, basierend auf verfügbaren Ressourcen und den vorhergesagten zukünftigen Netzwerkkapazitätsanforderungen,
Senden einer oder mehrerer Kommunikationsdrohnen-Routing-Anforderungen zum Kommunikationsdrohnen-Routing und zur Platzierung zur Bereitstellung von Netzwerkkapazität, wobei jede Kommunikationsdrohnen-Routing-Anforderung ihre jeweilige berechnete optimale Platzierung aufweist, an das Drohnenzug-Subsystem; und
optimales Einsetzen (S4) von Kommunikationsdrohnen an einem Anomalieort, der durch die eine oder mehrere Kommunikationsdrohnen-Routing-Anforderungen spezifiziert ist, durch das Drohnenzug-Subsystem.

8. Verfahren nach Anspruch 7, wobei das Ergebnis des Vergleichsschritts (S2) Netzwerkanomalie-Informationen zum Anzeigen eines anomalen Teilnehmerverhaltens innerhalb einer Lokalität von Teilnehmern aufweist, wobei das Teilnehmerverhalten als normal angesehen wird, wenn es innerhalb eines vordefinierten Bereichs des vorhergesagten Verhaltens liegt, und als anomal angesehen wird, wenn es nicht innerhalb des vordefinierten Bereichs des vorhergesagten Verhaltens liegt, und
wobei die eine oder mehrere Überwachungsdrohnen-Routing-Anforderungen die Netzwerkanomalie-Informationen aufweisen.

9. Verfahren nach Anspruch 7 oder 8, das ferner den Schritt aufweist:
Empfangen von Informationen bezüglich eines Drohnenstatus vom Drohnenzug-Subsystem durch den Überwachungsdrohnen-Routing-Algorithmus.

10. Verfahren nach Anspruch 9, wobei die Drohneninformation eine oder mehrere der folgenden Informationen über eine Drohne aufweist: Standort, Fähigkeiten, Verfügbarkeit, Batteriestatus, laufende Aktivität.

11. Verfahren nach einem der Ansprüche 7 bis 10, das ferner die Schritte aufweist:
wobei das Sammeln von Überwachungsinformationen am Anomalieort durch eine oder mehrere der eingesetzten Überwachungsdrohnen das Durchführen, durch die Überwachungsdrohne, von einem oder mehreren aufweist von: Video- oder Audioüberwachung und/oder Umgebungserfassung, und/oder
Bereitstellen, durch die Kommunikationsdrohne, zusätzlicher Netzwerkkommunikation und/oder Verarbeitungskapazität auf einer Ad-hoc-Basis als Teil des Kommunikationsnetzwerks, und/oder
Verwenden der Kommunikationsdrohne als mobile Basisstation.

12. Verfahren nach einem der Ansprüche 7 bis 11, das ferner den Schritt aufweist:
Empfangen von Daten über den Drohnenstatus durch den Überwachungsdrohnen-Routing-Algorithmus vom Drohnenzug-Subsystem, wobei die Drohneninformationen eines oder mehreres aufweisen von: Ort, Fähigkeiten, Verfügbarkeit, Batteriestatus und/oder Informationen über laufende Aktivitäten; und/oder
wobei die Überwachungsinformationen eines oder mehreres aufweisen von: Überwachungsinformationen, Drohnenorte, Netzwerkaktivität und Teilnehmeraktivität.

## Revendications

1. Système comprenant un réseau de communication (10) et un système de fourniture de drones (20), le réseau de communication (10) comprenant un sous-système de modélisation de réseau (11) et un algorithme de comparaison de comportement de réseau (12), le système de fourniture de drones (20) comprenant un sous-système de flotte de drones (21) comprenant un ensemble de drones, l'ensemble de drones comprenant au moins un drone de surveillance et un drone de communication, bien que les drones de surveillance fonctionnent également comme drones de communication, un algorithme d'acheminement de drones de surveillance (22), un algorithme de prévision et de détection de comportement anormal (23) et un algorithme de placement de drone de communication (24), où :
le sous-système de modélisation de réseau (11) est configuré pour surveiller une activité de réseau et créer un modèle de prévision de comportement d'abonné en termes de trafic réseau ;
l'algorithme de comparaison de comportement de réseau (12) est configuré pour :
comparer le modèle de comportement d'abonné prévu au trafic réseau en cours, identifier toute activité anormale en tant que différences significatives entre l'activité en cours et
l'activité prévue, et transmettre des données d'anomalie de réseau au système de fourniture de drones (20) ;
l'algorithme d'acheminement de drones de surveillance (22) est configuré pour adresser une ou plusieurs demandes d'acheminement de drones de surveillance au sous-système de flotte de drones (21), sur la base des données d'anomalie ;
le sous-système de flotte de drones (21) est configuré pour déployer un ou plusieurs drones de surveillance vers un emplacement d'anomalie spécifié par la ou les demandes d'acheminement de drones de surveillance, le ou les drones de surveillance déployés étant configurés pour :
recueillir des informations de surveillance sur l'emplacement d'anomalie,
fournir des capacités de service additionnelles temporaires, et
adresser les informations de surveillance à l'algorithme de prévision et de détection de comportement anormal (23) ;
l'algorithme de prévision et de détection de comportement anormal (23) est configuré pour :
détecter un comportement anormal sur la base des informations de surveillance,
identifier la cause de l'anomalie sur la base des informations de surveillance,
prévoir des exigences de capacité futures et un comportement d'abonné futur, et
transmettre les exigences de capacité futures prévues à l'algorithme de placement de drone de communication (24) ;
l'algorithme de placement de drone de communication (24) est configuré pour :
calculer un placement optimal d'un ou de plusieurs drones de communication pour satisfaire aux exigences de capacité réseau actuelles et futures, sur la base de ressources disponibles et des exigences de capacité réseau futures prévues,
transmettre au sous-système de flotte de drones (21) une ou plusieurs demandes d'acheminement de drones de communication, afin d'acheminer et de placer des drones de communication pour la fourniture de capacité réseau, chaque demande d'acheminement de drone de communication comprenant son placement optimal calculé respectif ;
le sous-système de flotte de drones (21) est configuré pour déployer de manière optimale des drones de communication vers un emplacement d'anomalie spécifié par la ou les demandes d'acheminement de drones de communication.

2. Système selon la revendication 1, où le résultat de la comparaison comprend des informations d'anomalie de réseau pour l'indication d'un comportement d'abonné anormal à l'intérieur d'une localité d'abonnés, le comportement d'abonné étant considéré comme normal s'il est compris dans une plage de comportement prévu prédéfinie et étant considéré comme anormal s'il n'est pas compris dans la plage de comportement prévu prédéfinie, et
où la ou les demandes d'acheminement de drones de surveillance comprennent les informations d'anomalie de réseau.

3. Système selon la revendication 1 ou la revendication 2, où l'algorithme d'acheminement de drones de surveillance (22) est configuré pour recevoir des informations relatives à un statut de drone du sous-système de flotte de drones (21).

4. Système selon la revendication 3, où les informations de drone comprennent une ou plusieurs des informations suivantes d'un drone : localisation, capacités, disponibilité, état de batterie, activité en cours.

5. Système selon l'une des revendications 1 à 4, où le recueil d'informations de surveillance sur l'emplacement d'anomalie, par un ou plusieurs des drones de surveillance déployés, comprend la configuration d'un ou de plusieurs des drones de surveillance déployés pour effectuer : une surveillance vidéo ou audio et/ou une détection environnementale, et/ou où le drone de communication est configuré pour fournir une capacité additionnelle de communications réseau et/ou de traitement sur une base adéquate en tant que partie du réseau de communication, et/ou
où le drone de communication est configuré comme station de base mobile.

6. Système selon l'une des revendications 1 à 5, où l'algorithme d'acheminement de drones de surveillance (22) est configuré pour recevoir des données sur le statut de drone du sous-système de flotte de drones (21), les informations de drone comprenant une ou plusieurs des informations suivantes : localisation, capacités, disponibilité, état de batterie et/ou activité en cours ; et/ou
où les informations de surveillance comprennent une ou plusieurs des informations suivantes : informations de surveillance, localisations des drones, activité de réseau et activité d'abonné.

7. Procédé de fourniture de drones dans un système, ledit système comprenant un réseau de communication et un système de fourniture de drones, le réseau de communication comprenant un sous-système de modélisation de réseau et un algorithme de comparaison de comportement de réseau, le système de fourniture de drones comprenant un sous-système de flotte de drones comprenant un ensemble de drones, l'ensemble de drones comprenant au moins un drone de surveillance et un drone de communication, bien que les drones de surveillance fonctionnent également comme drones de communication, un algorithme d'acheminement de drones de surveillance, un algorithme de prévision et de détection de comportement anormal et un algorithme de placement de drone de communication, ledit procédé comprenant les étapes suivantes :
surveillance de l'activité de réseau et création (S1), par le sous-système de modélisation de réseau, d'un modèle de prévision de comportement d'abonné en termes de trafic réseau ;
comparaison (S2), par l'algorithme de comparaison de comportement de réseau, du modèle de comportement d'abonné prévu avec le trafic réseau en cours, identification de toute activité anormale en tant que différences significatives entre l'activité en cours et l'activité prévue, et transmission de données d'anomalie de réseau au système de fourniture de drones ;
transmission, par l'algorithme d'acheminement de drones de surveillance, d'une ou de plusieurs demandes d'acheminement de drones de surveillance au sous-système de flotte de drones, sur la base des données d'anomalie ;
déploiement (S3), par le sous-système de flotte de drones, d'un ou de plusieurs drones de surveillance vers un emplacement d'anomalie spécifié par la ou les demandes d'acheminement de drones de surveillance, où le drone ou les drones de surveillance déployés : recueillent des informations de surveillance sur l'emplacement d'anomalie, fournissent des capacités de service additionnelles temporaires, et transmettent les informations de surveillance à l'algorithme de prévision et de détection de comportement anormal,
où l'algorithme de prévision et de détection de comportement anormal exécute les étapes suivantes détection d'un comportement anormal sur la base des informations de surveillance, identification de la cause de l'anomalie sur la base des informations de surveillance, prévision d'exigences de capacité futures et de comportement d'abonné futur, et transmission des exigences de capacité futures prévues à l'algorithme de placement de drone de communication,
où l'algorithme de placement de drone de communication exécute les étapes suivantes :
calcul d'un placement optimal d'un ou de plusieurs drones de communication pour satisfaire aux exigences de capacité réseau actuelles et futures, sur la base de ressources disponibles et des exigences de capacité réseau futures prévues,
transmission au sous-système de flotte de drones d'une ou de plusieurs demandes d'acheminement de drones de communication, afin d'acheminer et de placer des drones de communication pour la fourniture de capacité réseau, chaque demande d'acheminement de drone de communication comprenant son placement optimal calculé respectif ; et
déploiement optimal (S4), par le sous-système de flotte de drones, de drones de communication vers un emplacement d'anomalie spécifié par la ou les demandes d'acheminement de drones de communication.

8. Procédé selon la revendication 7, où le résultat de l'étape de comparaison (S2) comprend des informations d'anomalie de réseau pour l'indication d'un comportement d'abonné anormal à l'intérieur d'une localité d'abonnés, le comportement d'abonné étant considéré comme normal s'il est compris dans une plage de comportement prévu prédéfinie et étant considéré comme anormal s'il n'est pas compris dans la plage de comportement prévu prédéfinie, et
où la ou les demandes d'acheminement de drones de surveillance comprennent les informations d'anomalie de réseau.

9. Procédé selon la revendication 7 ou la revendication 8, comprenant en outre l'étape de :
réception, par l'algorithme d'acheminement de drones de surveillance, d'informations relatives à un statut de drone du sous-système de flotte de drones.

10. Procédé selon la revendication 9, où les informations de drone comprennent une ou plusieurs des informations suivantes d'un drone : localisation, capacités, disponibilité, état de batterie, activité en cours.

11. Procédé selon l'une des revendications 7 à 10, comprenant en outre les étapes suivantes :
le recueil d'informations de surveillance sur l'emplacement d'anomalie, par un ou plusieurs des drones de surveillance déployés comprend l'exécution, par le drone de surveillance : d'une surveillance vidéo ou audio et/ou d'une détection environnementale, et/ou
fourniture, par le drone de communication, d'une capacité additionnelle de communications réseau et/ou de traitement sur une base adéquate en tant que partie du réseau de communication, et/ou l'utilisation du drone de communication comme station de base mobile.

12. Procédé selon l'une des revendications 7 à 11, comprenant en outre l'étape de :
réception, par l'algorithme d'acheminement de drones de surveillance, de données sur le statut de drone du sous-système de flotte de drones, les informations de drone comprenant une ou plusieurs des informations suivantes : localisation, capacités, disponibilité, état de batterie et/ou activité en cours ; et/ou
où les informations de surveillance comprennent une ou plusieurs des informations suivantes : informations de surveillance, localisations des drones, activité de réseau et activité d'abonné.
